Europäisches Patentamt

European Patent Office

Office européen des brevets

(11) Veröffentlichungsnummer: **0 264 350**
**A1**

(12) **EUROPÄISCHE PATENTANMELDUNG**

(21) Anmeldenummer: 87810600.4

(22) Anmeldetag: 16.10.87

(51) Int. Cl.⁴: **G 05 B 19/405**
**B 25 J 19/06**

(30) Priorität: **16.10.86 CH 4145/86**

(43) Veröffentlichungstag der Anmeldung:
**20.04.88 Patentblatt 88/16**

(84) Benannte Vertragsstaaten:
**AT BE CH DE ES FR GB GR IT LI LU NL SE**

(71) Anmelder: **Sohard AG**
**Wankdorffeldstrasse 68**
**CH-3014 Bern (CH)**

(72) Erfinder: **Bouquet, Hanspeter**
**Kappelenring 52c**
**CH-3032 Hinterkappelen/BE (CH)**

**Engelberger, Ernst**
**Tannackerstrasse 24**
**CH-3302 Moosseedorf/BE (CH)**

**Gnägi, Peter**
**Binderstrasse 46**
**CH-8702 Zollikon/ZH (CH)**

(74) Vertreter: **Tschudi, Lorenz et al**
**Bovard AG Patentanwälte VSP Optingenstrasse 16**
**CH-3000 Bern 25 (CH)**

(54) Prozessgesteuerte Anlage sowie Ueberwachungsschaltung insbesondere für solche Anlagen.

(57) Die prozessgesteuerte Anlage umfasst einen Roboter (1), einen Sicherheitskreis (2) sowie eine Ueberwachungsschaltung (3). Der Roboter umfasst mindestens einen Motor (4), mindestens einen Drehmelder (5), mindestens ein Potentiometer (6), einen Prozessor (7), einen Leistungsteil (8), einen Abschaltschütz (9) sowie einen Sensor (10). Der Sicherheitskreis (2) umfasst eine Zutrittsampel (15), einen Türkontakt (16), eine Zustimmtaste (17) sowie eine Notstoptaste (18). Die Ueberwachungsschaltung (3) umfasst mindestens eine Achsschnittstelle (40), mindestens einen Slave-Prozessor (44), einen Datenbus (48), einen Master-Prozessor (49), eine Ueberwachungseinheit (50), eine Steuereinheit (51) sowie eine Parallelschnittstelle (52). Die Ueberwachung der prozessgesteuerten Anlage findet dauernd statt, wenn sich eine Bedienungsperson im Nahbereich des Roboters befindet, wobei in diesem Falle der Roboter nur im Schleichbetrieb arbeitet oder stillsteht. Die Anlage wird dann abgeschaltet, wenn eine gefährliche Situation entsteht, d.h. wenn der Roboter Fehler macht oder ein Sensordefekt festgestellt wird.

FIG. 1

FIG. 2

**Beschreibung**

PROZESSGESTEUERTE ANLAGE SOWIE UEBERWACHUNGSSCHALTUNG INSBESONDERE FUER SOLCHE ANLAGEN

Die vorliegende Erfindung betrifft eine prozessgesteuerte Anlage sowie eine Ueberwachungsschaltung insbesondere für solche Anlagen.

Komplexe prozessgesteuerte Anlagen, wie Industrieroboter oder CNC-Anlagen, stellen besondere Anforderungen an die Betriebssicherheit, wenn sich Bedienungspersonen bei eingeschalteter Anlage im Gefahrenbereich aufhalten müssen. Bei bekannten Ueberwachungssystemen hat die Bearbeitungsmaschine den Orientierungssinn verloren, wenn sie sicherheitsmässig abgestellt wurde. Die Systeme mussten entweder ausgeschaltet oder nicht ausgeschaltet werden, wobei sich bei nicht-ausgeschalteten Systemen eine entsprechende Gefahr unter Umgehung der Sicherheitsvorschriften ergab. Wenn der Roboter komplett ausgeschaltet wird, so verliert er die Information, z.B. des Nullpunktes, und das Werkstück kann nicht mehr weiterbearbeitet werden, muss also als Ausschuss betrachtet werden, was zu erhöhten Unkosten und Zeitverlusten führt.

Es soll eine Ueberwachungsschaltung für eine prozessgesteuerte Anlage, wie z.B. einen Industrieroboter oder eine CNC-Anlage, geschaffen werden, welche bewirkt, dass die Anlage in einen Stand-by-Betrieb genommen wird, wenn sich eine Bedienungsperson in einem gefährlichen Nahbereich befindet. Die Ueberwachung soll dauernd stattfinden, wenn sich die Person im Nahbereich befindet, wobei die Anlage nur dann abgeschaltet werden soll, wenn eine gefährliche Situation entsteht, d.h. wenn z.B. der Roboter Fehler macht. Das System soll auch bei der Ueberwachung, wenn sich eine Person im gefährlichen Nahbereich befindet, weiterarbeiten können, so dass das gerade bearbeitete Werkstück nicht verlorengeht. Die Ueberwachungsschaltung soll sich auch selbst kontrollieren, d.h. wenn die Funktion der Ueberwachung nicht mehr übernommen werden kann, soll dies angezeigt werden. In diesem Falle kann die Bedienungsperson sich nicht mehr im Nahbereich aufhalten, ohne dass die Anlage abgestellt wird; dies gilt im Falle einer notwendigen Reparatur. Bei der Ueberwachung soll die Ueberwachungsschaltung wissen, welche maximale Geschwindigkeit der Bearbeitungsachsen der Anlagen nicht überschritten werden darf, wenn sich eine Bedienungsperson im Nahbereich befindet.

Dies wird erfindungsgemäss durch die kennzeichnenden Merkmale der unabhängigen Patentansprüche erzielt.

Bevorzugte Ausführungsformen der Erfindung ergeben sich aus den abhängigen Ansprüchen.

Im folgenden wird anhand der beiliegenden Zeichnung ein Ausführungsbeispiel der Erfindung sowie dessen Verwendung näher beschrieben. Es zeigen:

Fig. 1 ein Blockschaltbild des Ueberwachungssystems mit der Ueberwachungsschaltung,

Fig. 2 ein Blockschaltbild der Ueberwachungsschaltung,

Fig. 3 ein Signaldiagramm für Sonderbetrieb (Normalfall),

Fig. 4 ein Signaldiagramm für Sonderbetrieb mit automatischem Notstop,

Fig. 5 ein Signaldiagramm für Sonderbetrieb mit automatischem Notstop in einer anderen Gefahrensituation als beim Beispiel gemäss Fig. 5.

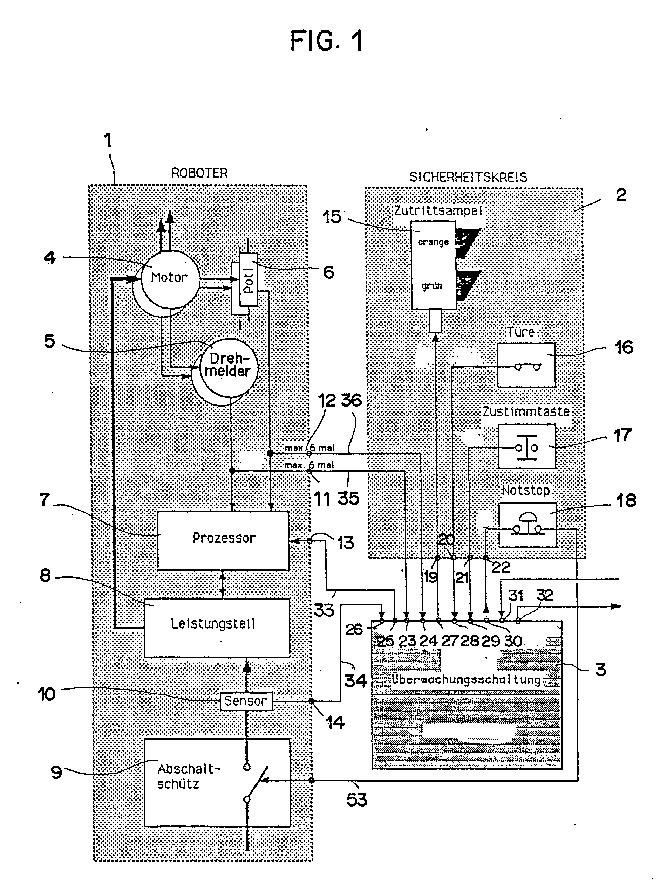

In Fig. 1 sind in einem Blockschaltbild ein Roboter 1, ein Sicherheitskreis 2 sowie eine Ueberwachungsschaltung 3 dargestellt. Der Roboter umfasst einen oder mehrere Motoren 4, die mit je einem Drehmelder 5 und einem Potentiometer 6 verbunden sind. Der Drehmelder und das Potentiometer sind mit einem Prozessor 7 verbunden. Der Prozessor 7 wirkt auf einen Leistungsteil 8, an welchen der oder die Motoren angeschlossen sind. Ein Abschaltschütz 9 ist mit einem Sensor 10 verbunden, welcher feststellt, ob Strom fliesst. Die Verbindungsleitung zwischen Drehmelder 5 und Prozessor 7 ist an eine Ausgangsklemme 11 des Roboters geführt. Die Verbindungsleitung zwischen Potentiometer 6 und Prozessor 7 ist an eine Ausgangsklemme 12 des Roboters geführt. Im weiteren ist eine Eingangsklemme 13 für den Prozessor sowie eine Ausgangsklemme 14 für den Sensor 10 vorgesehen. Der Sicherheitskreis 2 umfasst eine Sicherheitsampel 15, eine Türe 16, eine Zustimmtaste 17 sowie eine Notstoptaste 18. Der Sicherheitskreis weist einen Eingang 19 für die Zutrittsampel 15 auf. Im weiteren ist ein Ausgang 20 vom Türkontakt 16, ein Ausgang 21 von der Zustimmtaste 17 sowie ein Eingang 22 für die Notstoptaste 18 vorgesehen. Die Notstoptaste 18 ist über eine Leitung 53 mit dem Abschaltschütz 9 verbunden.

Die Ueberwachungsschaltung 3 weist zwei Eingänge 23 und 24 auf, die mit den Ausgängen 11 und 12 des Roboters 1 verbunden sind. Im weiteren ist ein Ausgang 25 vorgesehen, der mit dem Eingang 13 des Roboters und ein Eingang 26, der mit dem Ausgang 14 des Roboters verbunden ist. Ein Ausgang 27 ist mit dem Eingang 19 des Sicherheitskreises verbunden. Zwei Eingänge 28 und 29 sind mit den Ausgängen 20 und 21 und ein Ausgang 30 mit dem Eingang 22 des Sicherheitskreises verbunden. Im weiteren ist ein Eingang 31 vorgesehen, über welchen die Anforderung von der Robotersteuerung kommt, die Ueberwachungsschaltung aktiv zu schalten und die Eingangstüre zum Roboter zu entriegeln. Ueber einen Ausgang 32 wird ein Ausgangssignal zum Entriegeln der Türe (Ueberwachungsschaltung-OK) abgegeben. Ueber eine Leitung 33 wird der Roboter mit einem Steuersignal abgestellt, ohne dass die Stromversorgung des Roboters ausgeschaltet wird (soft stop).

Ueber eine Leitung 34 zeigt der Sensor 10 an, ob die Roboteranlage unter Spannung ist. Pro Achse eines Motors 4 sind Drehmelder (Resolver) 5 installiert, die fest mit der Motorachse verbunden sind und ca. 200 Impulse pro Umdrehung liefern. Dieses Signal wird zur Erkennung des Stillstandes auf einen Vorwärts-Rückwärtszähler gegeben. Pro Motorenachse ist ein Potentiometer 6 installiert, das eine absolute, aber (verglichen mit den Drehmeldern) ungenaue Lage des Armes signalisiert (Analogspannung). Zwischen den Drehmeldern und den Potentiometersignalen besteht eine linear vorausgesetzte Beziehung (X Drehmelderimpulse entsprechen Y Spannungsdifferenz am Potentiometer). Der Ausgang 11 des Roboters 1 ist über eine Leitung 35 mit dem Eingang 23 und der Ausgang 12 des Roboters über eine Leitung 36 mit dem Eingang 24 der Ueberwachungsschaltung verbunden. Die Zutrittsampel 15 gibt dem Benutzer an, ob er den Sicherheitskreis betreten darf oder nicht.

| Ampel | Bedeutung | Bedingung |
|---|---|---|
| nichts | Betreten VERBOTEN | Anlage schnell ODER Peripherie nicht sicher ODER Warnung pendent |
| gelb | Betreten unter besonderen Bedingungen ERLAUBT | Anlage langsam ODER still UND Peripherie sicher |
| grün | Betreten ohne besondere Bedingungen ERLAUBT | Anlage ausgeschaltet UND Peripherie ausgeschaltet |

Der Türkontakt 16 zeigt an, ob die Türe zum Roboter geschlossen ist oder nicht. Für gewisse Funktionen im Einrichtbetrieb (Schleichbewegung des Roboters usw.) muss die Zustimmung durch die Hantierungsperson mit der Zustimmtaste 17 gegeben werden. Die Zustimmtaste 17 wird durch die Ueberwachungsschaltung derart überwacht, dass sie nicht dauernd gedrückt werden kann, vorzugsweise alle fünf Minuten. Die Notstoptaste 18 schaltet den ganzen Leistungsteil des Roboters über die Leitung 53 ab, sobald im Einrichtbetrieb eine Sicherheitsbedingung nicht mehr zutrifft.

Die Ueberwachungsschaltung überwacht auf der Basis der in der Zielanlage (Roboter, CNC-Anlage) eingebauten Sensorik (Drehmelder, Codierer, Potentiometer, Endschalter), ob der Zustand (Geschwindigkeit, Stellung der einzelnen Achsen, Werkzeuge oder andere Peripherieteile) gestattet ist oder nicht. Im Fehlerfall werden die betroffenen Anlageteile leistungsmässig ausgeschaltet. Da sowohl die Ueberwachung als auch die Abschaltung der Zielanlage von einem unabhängigen System durchgeführt werden, dürfen auch Anlagen mit reiner Leistungselektronik eingeschaltet bleiben, wenn sich Personen im Gefahrenbereich befinden.

Die Ueberwachungsschaltung führt folgende Funktionen aus:
- Erfassung des Betriebszustandes (Normalbetrieb/Sonderbetrieb)
- Steuerung einer Zutrittsampel
- Erfassung der überwachten Anlageparameter und Abschaltung, falls unzulässiger Zustand vorliegt
- Abschaltvorgang wird spätestens 100 ms nach Feststellen eines Fehler eingeleitet.

Das zu überwachende Zielsystem (Roboter, CNC-Anlage) stellt der Ueberwachungsschaltung die folgenden Signale zur Verfügung:
- zwei unabhängige Sensorsignale für die gleiche Position oder Position und Geschwindigkeit
- diverse digitale Signale, welche für die Bestimmung der Betriebsart (Normalbetrieb, Sonderbetrieb) der Zielanlage benötigt werden.

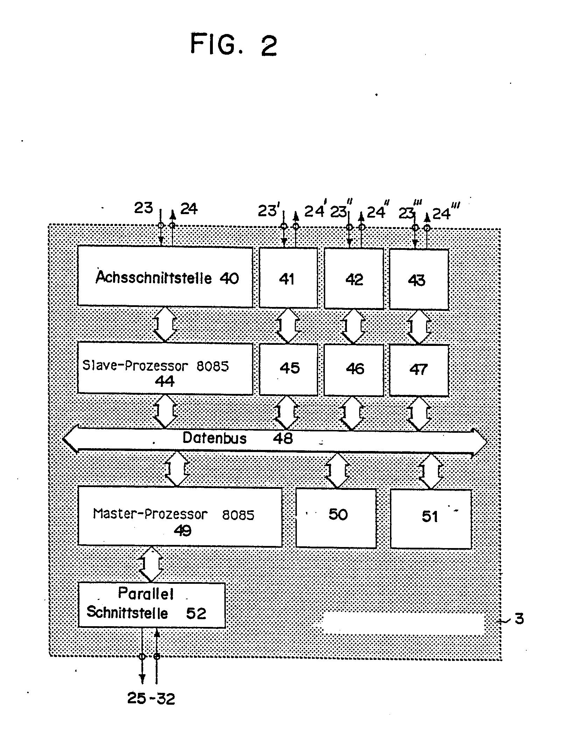

Aus Fig. 2 ist die Ueberwachungsschaltung 3 für das Ueberwachungssystem gemäss Fig. 1 ersichtlich. Sie umfasst Achsschnittstellen (Achs-Interface) 40, 41, 42 und 43, die über Aus- resp. Eingänge 23, 24; 23′, 24′; 23″, 24″; 23‴ 24‴ mit den Drehmeldern resp. Potentiometern 5 und 6; 5′, 6′; 5″, 6″; 5‴, 6‴ verbunden sind. Die Achsschnittstellen sind mit Slave-Prozessoren 44, 45, 46 und 47, vorzugsweise vom Typ 8085, verbunden. Die Slave-Prozessoren sind mit einem Datenbus 48 (SMP-Systembus) verbunden. Mit dem Datenbus 48 ist ein Master-Prozessor 49, vorzugsweise vom Typ 8085, eine Ueberwachungseinheit (Watchdog) 50 sowie eine Steuereinheit (Control-Panel) 51 verbunden. Der Master-Prozessor 49 ist mit einer Parallelschnittstelle (Parallel-Interface) 52 verbunden. Die Parallelschnittstelle 52 führt zu den Aus- resp. Eingängen 25 - 32.

Der Master-Prozessor 49 gibt ein Abstellsignal ab, wenn die zusammengehörigen Achsen eines Systems nicht in Ordnung sind. Die Ueberwachungseinheit (Watchdog) 50 überwacht die Funktion des Ueberwachungssystems, wobei der Abschaltvorgang ebenfalls überwacht wird. Die Ueberwachungseinheit 50 erhält vom Master-Prozessor 49 periodische Signale.

Die Ueberwachungsschaltung ist zwischen dem Sensor resp. den Sensoren 10 und der in der Zielanlage eingebauten Steuerung 8 angeschlossen.

Der Anschluss der Sensoren an die Ueberwachungsschaltung wird so ausgeführt, dass bei einer Störung in der Ueberwachungsschaltung die Steuerung immer noch die richtigen Signale der Sensoren erhält.

Die Art der Sensoren ist abhängig von der Zielanlage. Je nach Typ der Sensoren werden in der Ueberwachungsschaltung entsprechende Schnittstellen (Interface) eingesetzt. Für die folgenden Sensoren bestehen Schnittstellen:

a) Drehmelder (Resolver) / Codierer (Encoder)

b) Potentiometer

c) Tachogenerator

Alle Eingänge werden über Optokoppler und alle Ausgänge über Relais galvanisch getrennt.

Die Ueberwachungsschaltung überprüft periodisch ihre Funktionstüchtigkeit. Wird ein Fehler festgestellt, so wird das Signal auf Leitung 53 abgeschaltet.

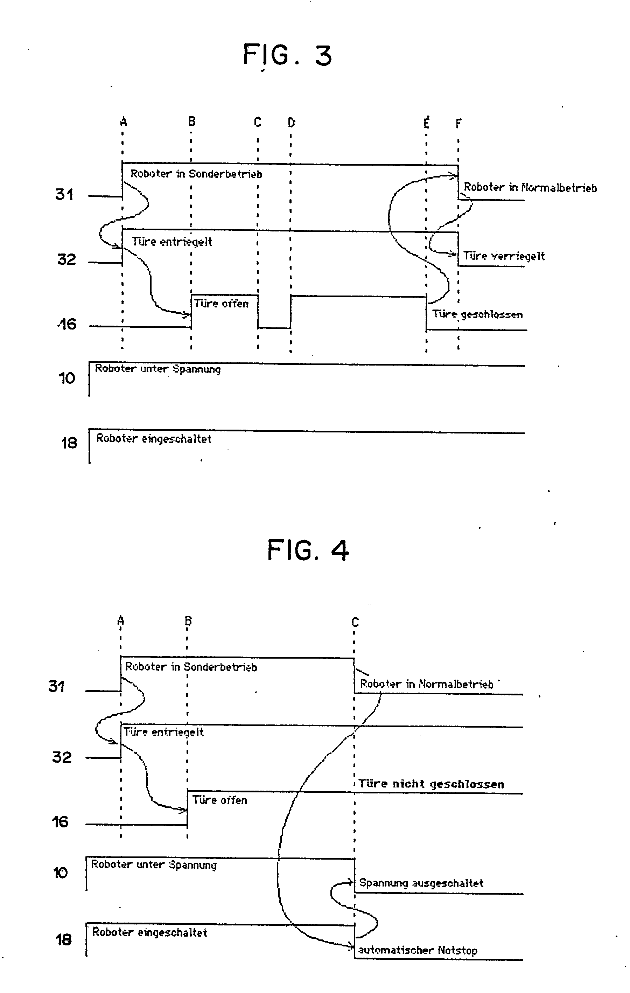

In Fig. 3 ist das Signaldiagramm für Sonderbetrieb (ohne Notabschaltung) dargestellt:

A : Der Roboter wird vom Normal- in den Sonderbetrieb (z.B. Einrichtbetrieb, Programmierung, Testlauf, Störungssuche) umgeschaltet. Die Ueberwachungsschaltung entriegelt die Türe, wenn kein Bewegungssensor eine zu hohe Geschwindigkeit anzeigt. Die Ueberwachungsphase beginnt.

B, D : Die Türe wird geöffnet, um den gefährdeten Raum zu betreten.

C, E : Die Türe wird geschlossen. Die Ueberwachungsphase dauert immer noch an.

F : Der Roboter wird vom Sonder- in den Normalbetrieb zurückgeschaltet. Die Ueberwachungsphase wird abgeschlossen, wenn die Türe zuvor geschlossen wurde, indem die Türe verriegelt wird.

In Fig. 4 ist ein Signaldiagramm für Sonderbetrieb mit automatischem Notstop dargestellt:

A : Der Roboter wird vom Normal- in den Sonderbetrieb (Einrichtbetrieb) umgeschaltet. Die Ueberwachungsschaltung entriegelt die Türe, wenn kein Bewegungssensor eine zu hohe Geschwindigkeit anzeigt. Die Ueberwachungsphase beginnt.

B : Die Türe wird geöffnet, um den gefährdeten Raum zu betreten.

C : Der Roboter wird vom Sonder- in den Normalbetrieb umgeschaltet, obwohl die Türe noch nicht geschlossen ist. Die Ueberwachungsschaltung schaltet sofort den Roboter ab.

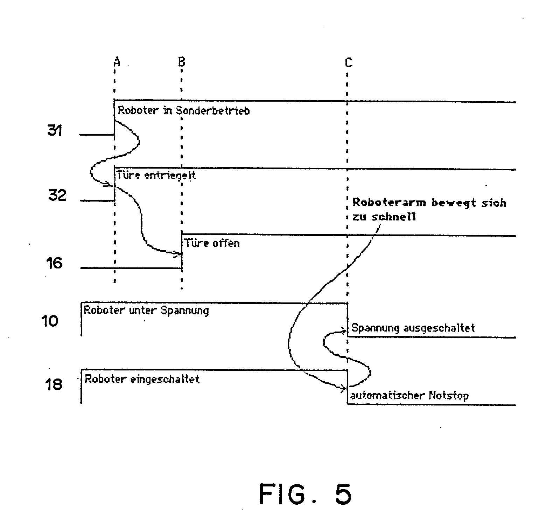

In Fig. 5 ist ein Signaldiagramm für Sonderbetrieb mit automatischem Notstop bei einer anderen Gefahrensituation als gemäss Fig. 4 dargestellt:

A : Der Roboter wird vom Normal- in den Sonderbetrieb (Einrichtbetrieb) umgeschaltet. Die Ueberwachungsschaltung entriegelt die Türe, wenn kein Bewegungssensor eine zu hohe Geschwindigkeit anzeigt. Die Ueberwachungsphase beginnt.

B, D : Die Türe wird geöffnet, um den gefährdeten Raum zu betreten.

C : Der Roboterarm bewegt sich zu schnell oder Sensordefekt festgestellt. Die Ueberwachungsschaltung schaltet den Roboter sofort ab.

Es bestehen prinzipiell zwei Ueberwachungsmöglichkeiten, d.h. entweder werden die Werte vom System übernommen, z.B. der Drehwinkel und die Geschwindigkeit des Roboters oder auf der bzw. den Achsen sind Winkelgeber und Geschwindigkeitsmesser montiert. Auch im Ruhezustand des Roboters oder der CNC-Anlage muss eine gewisse Toleranz zugelassen werden, da die Achse resp. die Achsen z.B. kleinste Bewegungen im µm-Bereich ausführen.

Es bestehen zwei Abschaltmöglichkeiten, nämlich der Sofort-Stop, oder es wird die Maschine in eine kontrollierte Lage gebracht. Das Ueberwachungssystem entscheidet, welche Abstellart gewählt wird. Wenn sich das System z.B. nach 50 ms nicht in einer kontrollierten Lage befindet, wird nach 100 ms der Sofort-Stop bewirkt. Das Ueberwachungssystem erhält die Messdaten vor der Steuerung, d.h. dieselben Daten wie die Steuerung, also nicht die Daten nach der Regelung.

Die Ueberwachung der Zielanlage, d.h. des Roboters oder der CNC-Anlage, wird durch eine unabhängige Ueberwachungsschaltung durchgeführt, welche immer eingeschaltet ist. Die Ueberwachungsfunktion wird dann ausgeführt, wenn eine Person den Nahbereich des Roboters betritt. Ueberwacht wird der Stillstand oder eine ganz langsame Bearbeitung, d.h. ein Schleichbetrieb resp. die Schleichgeschwindigkeit.

Die zu überwachenden Parameter können geändert werden; man ist nicht auf Winkel und Geschwindigkeit beschränkt. Es bestehen zwei unabhängige Erfassungsmöglichkeiten; es könnten auch z.B. zwei Winkel überwacht werden. Es wird im Schleichbetrieb auch überwacht, ob sich der Winkel und die Geschwindigkeit ändern. Falls dies nicht der Fall ist, so muss ein Fehler bei den Sensoren vorliegen. Somit wird auch die Funktionstüchtigkeit der Sensoren überwacht. Es können mehrere Achsen eines Roboters, vorzugsweise bis etwa sieben, gleichzeitig überwacht und gleichzeitig mehrere Anlagen, vorzugsweise vier, oder mehrere Sicherheitskreise überwacht werden.

Der Schleichbetrieb wird z.B. dann durchgeführt, wenn der Roboter in einem Lernmodus arbeitet, wobei dieser Schleichbetrieb überwacht wird.

Wenn sich eine Bedienungsperson im Nahbereich befindet, so findet eine Notabschaltung dann statt, wenn sich ein Roboter allzu schnell bewegt oder bei einem Sensorfehler.

## Patentansprüche

1. Prozessgesteuerte Anlage mit einem Roboter und einem Sicherheitskreis, gekennzeichnet durch eine mit dem Roboter und dem Sicherheitskreis zusammenwirkende Ueberwachungsschaltung, welche den Schleichbetrieb oder den Stillstand des Roboters überwacht, wenn sich eine Bedienungsperson im Nahbereich des Roboters befindet.

2. Anlage nach Patentanspruch 1, dadurch gekennzeichnet, dass zusätzich noch mindestens ein bearbeitendes Peripheriegerät vorgesehen ist.

3. Anlage nach Patentanspruch 1 oder 2, dadurch gekennzeichnet, dass der Roboter mindestens einen Motor (4), mindestens einen Drehmelder (5), mindestens ein Potentiometer (6), einen Prozessor (7), einen Leistungsteil (8), einen Abschaltschütz (9) sowie mindestens einen Sensor (10) umfasst.

4. Anlage nach Patentanspruch einem der vorangehenden Patentansprüche, dadurch gekennzeichnet, dass der Sicherheitskreis einen Türkontakt (16), eine Zustimmtaste (17) und eine Notstoptaste (18) sowie gegebenenfalls eine Zutrittsampel (15) umfasst.

5. Anlage nach einem der vorangehenden Patentansprüche, dadurch gekennzeichnet, dass die Verbindungsleitungen des Drehmelders mit dem Prozessor sowie des Potentiometers mit dem Prozessor mit Eingängen der Ueberwachungsschaltung verbunden sind.

6. Anlage nach einem der vorangehenden Patentansprüche, dadurch gekennzeichnet, dass der Sensor des Roboters mit einem Eingang der Ueberwachungsschaltung und einem Ausgang der Ueberwachungsschaltung mit dem Prozessor des Roboters verbunden ist.

7. Anlage nach einem der vorangehenden Patentansprüche, dadurch gekennzeichnet, dass ein Ausgang der Ueberwachungsschaltung mit der Zutrittsampel des Sicherheitskreises (15), der Türkontakt (16) des Sicherheitskreises (2) mit einem Eingang der Ueberwachungsschaltung sowie zwei weitere Ausgänge der Ueberwachungsschaltung mit der Zustimmtaste (17) und der Notstoptaste (18) des Sicherheitskreises verbunden sind, und an einer Ausgangsklemme (32) der Ueberwachungsschaltung ein Signal für die Entriegelung der Türe zum Roboter abgegeben wird, und an einer Eingangsklemme (31) der Ueberwachungsschaltung ein Signal von der Robotersteuerung eingegeben wird, die Ueberwachung der Roboteranlage aktiv zu schalten.

8. Ueberwachungsschaltung insbesondere für eine prozessgesteuerte Anlage mit Mitteln zum Ueberwachen des Roboters im Stillstand oder Schleichbetrieb, wenn sich eine Bedienungsperson im Nahbereich des Roboters befindet.

9. Ueberwachungsschaltung nach Patentanspruch 7, dadurch gekennzeichnet, dass sie mindestens eine Achsschnittstelle (40), mindestens einen Slave-Prozessor (44), einen Datenbus (48), einen Master-Prozessor (49), eine Ueberwachungseinheit (50), eine Steuereinheit (51) sowie eine Parallelschnittstelle (52) umfasst.

10. Ueberwachungsschaltung nach Patentanspruch 8 oder 9, dadurch gekennzeichnet, dass sie Anschlüsse für zusätzliche Peripheriegeräte aufweist.

# FIG. 1

0264350

# FIG. 2

23 24  23' 24' 23'' 24'' 23''' 24'''

| Achsschnittstelle 40 | 41 | 42 | 43 |

| Slave-Prozessor 8085 44 | 45 | 46 | 47 |

Datenbus 48

| Master-Prozessor 8085 49 | 50 | 51 |

Parallel Schnittstelle 52

~3

25-32

0264350

## FIG. 3

31 — Roboter in Sonderbetrieb — Roboter in Normalbetrieb

32 — Türe entriegelt — Türe verriegelt

16 — Türe offen — Türe geschlossen

10 — Roboter unter Spannung

18 — Roboter eingeschaltet

## FIG. 4

31 — Roboter in Sonderbetrieb — Roboter in Normalbetrieb

32 — Türe entriegelt — Türe nicht geschlossen

16 — Türe offen

10 — Roboter unter Spannung — Spannung ausgeschaltet

18 — Roboter eingeschaltet — automatischer Notstop

0264350

**FIG. 5**

Europäisches
Patentamt

**EUROPÄISCHER RECHERCHENBERICHT**

Nummer der Anmeldung

EP 87 81 0600

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 263 647  (MERREL) <br> * Insgesamt * <br> --- | 1,8 | G 05 B 19/405 <br> B 25 J 19/06 |
| A | DE-A-2 906 852  (VEB) <br> * Insgesamt * <br> --- | 1,8 | |
| A | EP-A-0 158 593  (GET) <br> * Insgesamt * <br> ----- | 1,8 | |

**RECHERCHIERTE SACHGEBIETE (Int. Cl.4)**

G 05 B 19
B 25 J 19

Der vorliegende Recherchenbericht wurde für alle Patentansprüche erstellt

| Recherchenort | Abschlußdatum der Recherche | Prüfer |
|---|---|---|
| DEN HAAG | 16-12-1987 | RESSENAAR J.P. |